**Europäisches Patentamt**

**European Patent Office**

**Office européen des brevets**

(11) Numéro de publication: **0 119 120**

**A1**

# (12) DEMANDE DE BREVET EUROPEEN

(21) Numéro de dépôt: **84400319.4**

(22) Date de dépôt: **16.02.84**

(51) Int. Cl.³: **F 16 D 27/16**
**F 16 D 27/10, H 01 F 7/13**

(30) Priorité: **16.02.83 FR 8302524**

(43) Date de publication de la demande:
**19.09.84 Bulletin 84/38**

(84) Etats contractants désignés:
**BE DE GB IT NL SE**

(71) Demandeur: **REGIE NATIONALE DES USINES RENAULT**
**Boîte postale 103 8-10 avenue Emile Zola**
**F-92109 Boulogne-Billancourt(FR)**

(72) Inventeur: **Banon, Louis**
**7, rue Cognacq-Jay**
**F-75007 Paris(FR)**

(72) Inventeur: **Herent, Gérard**
**8, avenue du Bois**
**F-92190 Meudon(FR)**

(74) Mandataire: **Kohn, Philippe et al,**
**Régie Nationale des Usines Renault-S.0804**
**F-92109 Boulogne Billancourt Cedex(FR)**

(54) **Dispositif de commande d'embrayage en effort.**

(57) Dispositif électromécanique piloté destiné à la commande directe en effort d'un embrayage à friction de structure conventionnelle à l'aide d'un vérin électrique à carcasse magnétique (1) et à noyau plongeur (2) associé à une électronique de commande, caractérisé par le fait que le noyau (2) et la carcasse (1) du vérin sont agencés de telle manière que la section minimale offerte au passage du flux dans la carcasse (1) varie linéairement avec la course (x) du noyau (2), et que le bobinage (7) de la carcasse (1) présente un nombre d'ampère-tours (NI) suffisant pour assurer la saturation de cette section d'étranglement, grâce à quoi la force fournie par ledit vérin est proportionnelle à l'intensité moyenne dans le bobinage (7) et indépendante de ladite course.

FIG.1

Dispositif de commande d'embrayage en effort.

L'invention concerne les dispositifs électromécaniques pilotés destinés à la commande en effort d'un embrayage à friction de structure conventionnelle.

On sait que les embrayages à friction, en raison de leur principe même, transmettent un couple qui est directement fonction de l'effort d'application des surfaces de friction l'une contre l'autre. Par ailleurs, les embrayages de structure conventionnelle comportent un ressort taré fournissant l'effort nécessaire pour le couple maximum que l'embrayage doit transmettre, et le mécanisme de commande exerce un effort antagoniste comprimant le ressort pour effectuer le débrayage, en relachant au contraire cet effort pour assurer l'embrayage, ceci pour réduire au maximum l'usure des organes de commande en fonctionnement normal. Toutefois, ce relachement d'effort doit pouvoir être modulé ou piloté d'une manière précise pour permettre l'accostage puis la montée progressive du couple lors d'un changement de rapport, et plus encore lors du démarrage à l'arrêt du véhicule, notamment lorsqu'il s'agit d'une commande automatique de boîte.

En laissant de côté les techniques hydrauliques de pilotage, qui comportent leurs propres particularités, pour s'en tenir aux seuls pilotages électromécaniques, le problème du pilotage purement électromécanique de l'effort d'embrayage ou de débrayage peut être résolu à l'aide d'un moteur-couple combiné avec un réducteur. Toutefois, cette solution est non seulement extrêmement onéreuse, mais présente également de graves irrégularités de fonctionnement, notamment dans une intervention rapide, en raison de l'inertie importante du moteur-couple, amplifiée par le réducteur.

Pour cette raison on lui préfère une commande électromécanique directe à l'aide d'un électro-aimant qui comprime le ressort lors du débrayage, et se trouve relaché progressivement pour assurer l'embrayage. Toutefois, la loi de variation de l'effort en fonction de la course pour les électro-aimants de type usuel est fortement non linéaire, alors qu'au contraire la loi de variation de la tension du ressort d'embrayage est aussi constante que possible, de telle manière que la loi de croissance du couple varie de manière importante en fonction de la course avant accostage, cette course variant elle-même en fonction notamment de l'usure des garnitures. Pour cette raison, on

2

est généralement obligé d'adjoindre à ces dispositifs électromagnétiques à commande directe des dispositifs de détection d'accostage combinés à des moyens de correction relativement complexes, onéreux et d'un réglage délicat.

Le but de l'invention est de surmonter les difficultés qui précèdent en réalisant par conséquent un dispositif de commande d'un embrayage conventionnel qui soit électromécanique, à commande directe sans réducteur, qui ne nécessite aucun détecteur d'accostage, et enfin dont l'effort obtenu résulte directement des caractéristiques de sa commande électrique et nullement des conditions particulières du dispositif, notamment de l'usure des garnitures.

L'invention consiste essentiellement à utiliser comme organe de commande un électro-aimant à noyau plongeur dont le circuit magnétique est agencé spécialement de telle manière que la section minimale offerte au flux magnétique au passage entre les deux armatures varie linéairement avec la course du noyau, et dont le circuit électrique comporte un nombre de tours et une alimentation suffisante pour assurer sur toute la course la saturation magnétique de cette section minimale, grâce à quoi l'effort fournit par l'électro-aimant est directement proportionnel au courant qui parcours le bobinage, et indépendant de la course du noyau.

L'invention consiste d'autre part à assurer le pilotage de ce courant de commande d'une manière extrêmement simple en réglant la tension moyenne d'alimentation essentiellement en fonction de la vitesse et de l'angle de rotation du moteur thermique.

D'autres particularités de l'invention apparaîtront dans la description qui va suivre d'un mode de réalisation et de mise en oeuvre pris comme exemple et représenté sur le dessin annexé, sur lequel :

la fig. 1 est une coupe axiale de l'électro-aimant;

la fig. 2 un schéma électrique de l'alimentation;

la fig. 3 représente le diagramme logique de la stratégie de commande; et

la fig. 4 la loi de variation de l'intensité du courant dans le bobinage de l'électro-aimant en fonction de la vitesse du moteur telle qu'elle résulte de la stratégie considérée.

L'électro-aimant ou vérin électrique utilisé est du type réluctant non polarisé d'une structure optimisée de manière que la puissance électrique consommée et le temps de réponse soient les plus faibles possible.

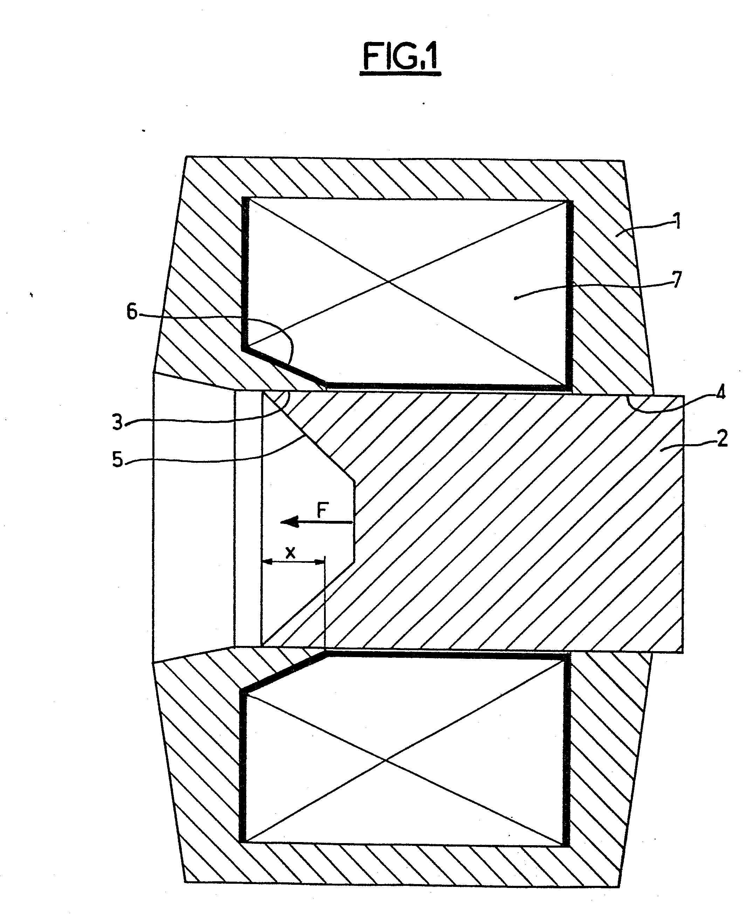

Son circuit magnétique comporte une carcasse extérieure 1 et un noyau plongeur 2 qui sont agencés pour refermer le circuit magnétique à travers deux entrefers de guidage 3 et 4, qui sont cylindriques dans l'exemple de la fig. 1.

En outre, les deux armatures 1 et 2 sont agencées de manière que le flux magnétique subisse un étranglement de façon que la section minimale offerte au flux varie de manière linéaire avec la course. La partie en regard de la carcasse 1 est délimitée, outre la surface cylindrique, par une surface conique 6 faisant un angle aigu avec la précédente. De cette manière, la section offerte au flux $\phi$ varie avec la course x du noyau 2, et même directement proportionnellement si x est mesuré à partir de la position qui correspond à une section nulle, c'est-à-dire à la mise en coïncidence des arêtes coniques du noyau 2 et de la carcasse 1. Dans l'exemple représenté, le noyau 2 est délimité, outre la surface cylindrique 3, par une surface conique 5 faisant un angle aigu avec la surface 3 afin de minimiser le flux de fuite.

En outre le circuit électrique de ce vérin électrique comporte un bobinage 7 comportant N spires et parcouru par un courant I, le nombre d'ampères tours NI étant suffisant pour assurer la saturation magnétique du matériau ferromagnétique dans la zone d'étranglement. Il en résulte que la valeur du flux magnétique $\phi$ se trouve dans ces conditions proportionnelle à x avec une constante de proportionalité qui ne dépend que du matériau considéré. Par suite, la valeur de l'effort F peut s'exprimer avec une très bonne approximation par

$$F = (\phi/x) \, NI = KI$$

en appelant K une valeur qui n'est fonction que du matériau ferromagnétique utilisé, la pente du cône 6, et du nombre de tours N du bobinage 7, et qui est donc une constante spécifique de l'appareil.

L'effort F fourni par ce vérin électrique est donc proportionnel au courant I et indépendant de la position x du noyau, ce qui justifie l'appellation de "vérin" électrique.

Naturellement, les formes indiquées précédemment ne sont qu'un exemple permettant de satisfaire la loi indiquée, mais un grand nombre d'autres formes serait possible, y compris des formes en circuit rectangulaire à la place des formes de révolution.

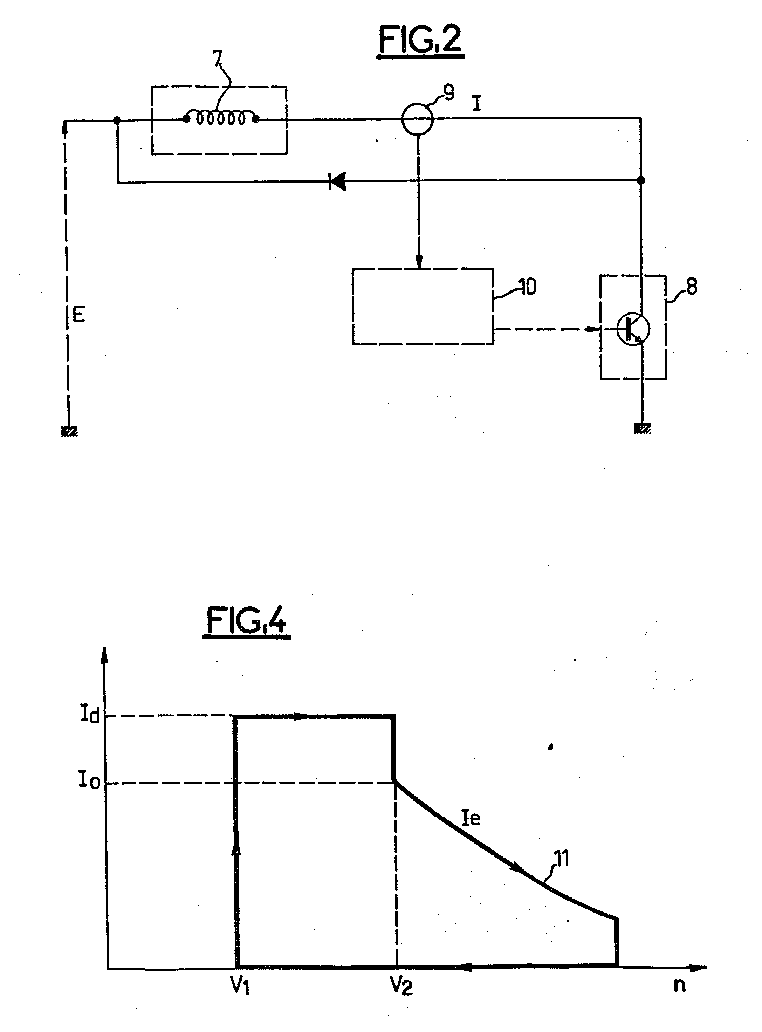

Pour assurer l'alimentation du bobinage 7 du vérin électrique, on peut utiliser le montage représenté sur la fig. 2, dans lequel le bobinage 7 est interposé entre une source de tension E et la masse avec interposition dans le circuit d'un hacheur 8 et d'un dispositif 9 de mesure d'intensité qui fournit un de signal d'entrée à un dispositif 10 assurant la stratégie de commande et commandant le rapport cyclique du hacheur 8. Le courant moyen I obtenu s'exprime alors par la relation $I = (E/R)(t/T)$ dans laquelle R est la résistance du bobinage 7, T la période de récurrence et t la durée de conduction au cours de chaque cycle. Le pilotage peut donc s'effectuer en variant t ou T, ou encore t et T.

En définitive, on voit donc qu'il suffit de fixer t/T, ou de l'asservir à une valeur I de consigne, pour imposer l'effort voulu sur le mécanisme d'embrayage d'une façon indépendante de la position relative du disque d'embrayage et du volant moteur, et notamment sans détection de l'accostage.

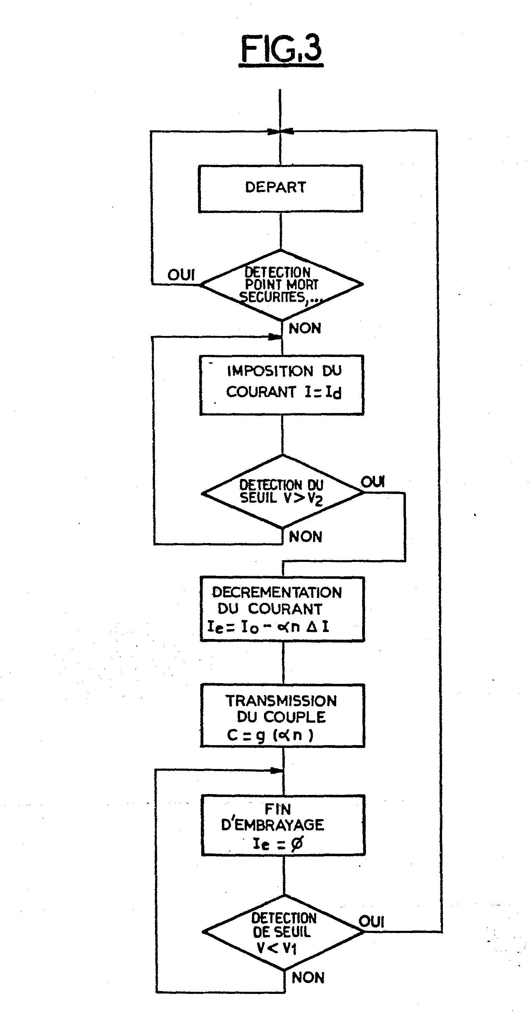

Le dispositif 10 de stratégie de pilotage peut en particulier être réalisé d'une manière très simple illustrée par les fig. 3 et 4, et en fonction essentiellement de la vitesse V et de l'angle de rotation du moteur thermique.

Pour assurer l'embrayage, au-delà d'un certain seuil V2 de la vitesse du moteur thermique, on impose dans l'enroulement du vérin un courant Ie variant de façon que le couple transmis par l'embrayage augmente proportionnellement avec l'angle $\alpha$ n de rotation de l'arbre moteur à partir du seuil de vitesse V2, cet angle étant par exemple exprimé en nombre de tours, entier ou fractionnaire. Pour cela on décrémente le courant Ie proportionnellement à l'angle $\alpha$ n et à un pas de décrémentation déterminé $\Delta I$ selon l'expression

$$Ie = Io - \alpha n. \Delta I$$

cette fonction d'embrayage est représentée par l'arc de courbe 11 sur la fig. 4.

Lorsque cette fonction d'embrayage est terminée, c'est-à-dire lorsque le courant a atteint la valeur 0, le couple développé par le moteur thermique est intégralement transmis à l'arbre d'entrée de la boîte. Toutefois, en deçà d'un certain seuil V1 du moteur thermique, et pour éviter le calage de celui-ci, on impose dans l'enroulement du vérin un courant de débrayage Id consigné à une valeur suffisante pour que le disque soit totalement désolidarisé du volant moteur. Ce courant est maintenu à cette valeur tant que la vitesse du moteur n'a pas atteint à nouveau par valeur croissante le seuil V2 qui autorise la mise en route d'un nouveau cycle d'embrayage.

REVENDICATIONS

1. Dispositif électromécanique piloté destiné à la commande directe en effort d'un embrayage à friction de structure conventionnelle à l'aide d'un vérin électrique à carcasse magnétique (1) et à noyau plongeur (2) associé à une électronique de commande, le noyau (2) et la carcasse (1) du vérin étant agencés de telle manière que la section minimale offerte au passage du flux dans la carcasse (1) varie linéairement avec la course (x) du noyau (2), caractérisé par le fait que le bobinage (7) de la carcasse (1) présente un nombre d'ampère-tours (NI) suffisant pour assurer sur toute la course la saturation de cette section d'étranglement, grâce à quoi la force fournie par ledit vérin est proportionnelle à l'intensité moyenne dans le bobinage (7) et indépendante de ladite course.

2. Dispositif selon la revendication 1, caractérisé par le fait que ledit bobinage (7) est alimenté à partir d'une source de tension (E) par l'intermédiaire d'un hacheur (8) dont le rapport cyclique (t/T) est asservi à l'intensité moyenne (I) parcourant le bobinage (7) et en fonction d'une valeur de consigne (Ie) définie par un dispositif de commande (10) réalisant la stratégie de la commande.

3. Dispositif selon la revendication 2, caractérisé par le fait que ladite stratégie de commande agit essentiellement en fonction de la vitesse et de l'angle de rotation du moteur, dans détection de l'accostage ni de la course de l'embrayage.

4. Dispositif selon la revendication 3, caractérisé par le fait que le fonction embrayage est réalisée automatiquement au-delà d'un seuil (V2) de vitesse du moteur et par décrémentation du courant (Ie) proportionnellement à l'angle de rotation ( n) du moteur.

5. Dispositif selon la revendication 4, caractérisé par le fait que le débrayage intervient automatiquement lorsque la vitesse du moteur tombe en deçà d'un seuil (V1) de vitesse minimale par l'application d'un courant maximum de débrayage (Id) et que celui-ci est maintenu jusqu'à ce que la vitesse passe à nouveau le seuil de débrayage (V2) par valeurs croissantes.

6. Dispositif selon la revendication 5, caractérisé par le fait que son dispositif électronique de commande obéit à une logique définie par l'organigramme de la figure 3.

FIG.1

## FIG.2

## FIG.4

# FIG.3

```
              ┌──────────────┐
              │    DEPART    │
              └──────────────┘
                     │
          OUI       ╱╲
         ◄─────────╱  ╲
                  ╱ DETECTION╲
                  ╲POINT MORT╱
                   ╲SECURITES,..╱
                    ╲  ╱
                     ╲╱
                    NON
                     │
              ┌──────────────┐
              │ IMPOSITION DU│
              │ COURANT I = Id│
              └──────────────┘
                     │
                    ╱╲           OUI
                   ╱  ╲─────────────►
                  ╱DETECTION DU╲
                  ╲SEUIL V > V2╱
                   ╲  ╱
                    ╲╱
                   NON
                     │
              ┌──────────────┐
              │ DECREMENTATION│
              │  DU  COURANT │
              │ Ie = Io - αn ΔI│
              └──────────────┘
                     │
              ┌──────────────┐
              │ TRANSMISSION │
              │  DU COUPLE   │
              │  C = g (αn ) │
              └──────────────┘
                     │
              ┌──────────────┐
              │     FIN      │
              │ D'EMBRAYAGE  │
              │   Ie = ∅     │
              └──────────────┘
                     │
                    ╱╲         OUI
                   ╱  ╲──────────────►
                  ╱DETECTION╲
                  ╲DE SEUIL ╱
                   ╲V < V1  ╱
                    ╲╱
                   NON
```

DEPART

DETECTION POINT MORT SECURITES,...

IMPOSITION DU COURANT $I = I_d$

DETECTION DU SEUIL $V > V_2$

DECREMENTATION DU COURANT $I_e = I_0 - \alpha_n \Delta I$

TRANSMISSION DU COUPLE $C = g(\alpha_n)$

FIN D'EMBRAYAGE $I_e = \emptyset$

DETECTION DE SEUIL $V < V_1$

**0119120**
Numéro de la demande

Office européen
des brevets

**RAPPORT DE RECHERCHE EUROPEENNE**

EP 84 40 0319

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A- 956 599 (BINDER) <br> * Page 4, colonne de droite, ligne 57 - page 5, colonne de droite, ligne 102; figures 6-9 * | 1 | F 16 D 27/16 <br> F 16 D 27/10 <br> H 01 F 7/13 |
| | --- | | |
| Y | US-A-3 725 747 (COWAN) <br> * Colonne 3, ligne 25 - colonne 6, ligne 63; figures 1-6 * | 1,2 | |
| | --- | | |
| Y | US-A-2 597 388 (SENSAUD) <br> * Colonne 4, ligne 61 - colonne 5, ligne 74; figures * | 1,5 | |
| | --- | | |
| A | FR-A-1 267 930 (RETEM) <br> * En entier * | 2-4 | |
| | --- | | |
| A | US-A-3 073 422 (BAUMANN) <br> * En entier * | 2-5 | DOMAINES TECHNIQUES RECHERCHES (Int. Cl. ³) |
| | ----- | | B 60 K <br> F 16 D <br> H 01 F |

Le présent rapport de recherche a été établi pour toutes les revendications

| Lieu de la recherche <br> LA HAYE | Date d'achèvement de la recherche <br> 24-05-1984 | Examinateur <br> DEVINE J.J |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

-------------------------------------------------

& : membre de la même famille, document correspondant

OEB Form 1503. 03.82